# EUROPÄISCHE PATENTSCHRIFT

(11) **EP 3 001 070 B1**
(45) Veröffentlichungstag und Bekanntmachung des Hinweises auf die Patenterteilung: **22.03.2017**
(21) Anmeldenummer: 14186836.4
(22) Anmeldetag: 29.09.2014
(51) Int. Cl.: F16H 57/04, F16H 57/033

(54) **Windkraft-Getriebe**
Wind power gear unit
Engrenage d'éolienne

(43) Veröffentlichungstag der Anmeldung: 30.03.2016
(73) Patentinhaber: Siemens Aktiengesellschaft, 80333 München (DE)
(72) Erfinder: Boland, Thomas, 46399 Bocholt (DE); Daners, Dominikus, 45701 Herten (DE)

(56) Entgegenhaltungen:
- EP-A1- 2 541 096
- EP-A2- 2 199 607
- US-A1- 2010 007 151

## Beschreibung

Die vorliegende Erfindung betrifft ein Windkraft-Getriebe. Windkraft-Getriebe, auch als WKA-Getriebe (WKA = Windkraftanlage) bezeichnet, übersetzen eine windgetriebene Rotordrehung in eine Drehung eines elektrischen Generators . Dabei kommen oftmals mehrstufige Getriebe zum Einsatz. Beispielsweise offenbart EP 2 199 607 B1 (Winergy AG) 23.06.2010 ein WKA-Getriebe mit einer ersten und einer zweiten Planetengetriebestufe und einer den Planetengetriebestufen nachgeschalteten Stirnradgetriebestufe.

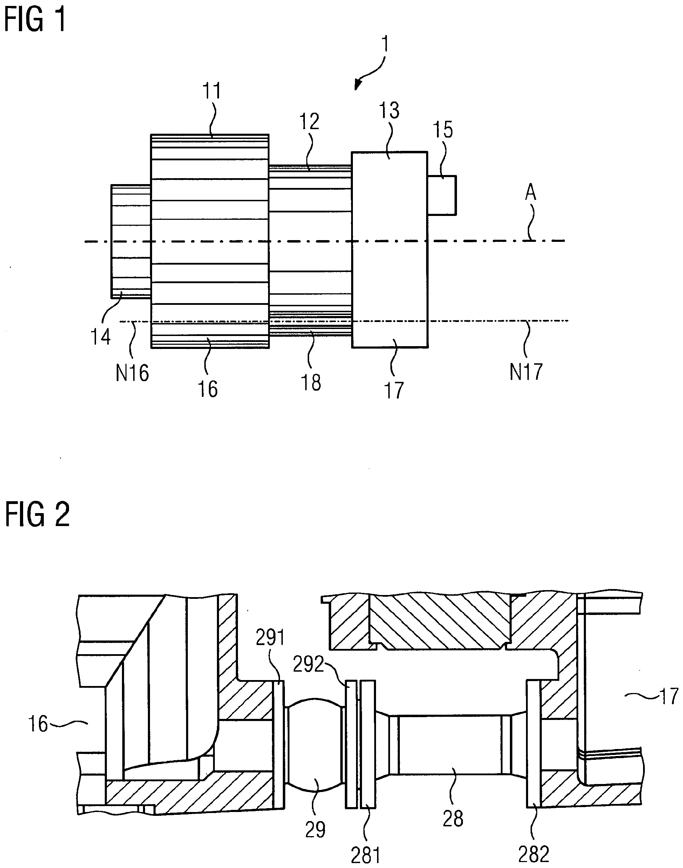

WKA-Getriebe benötigen während des Betriebs eine ausreichende Ölschmierung. Zur Aufnahme des dazu verwendeten Schmieröls weist ein WKA-Getriebe Ölräume auf, d.h. zumindest teilweise mit Öl gefüllte Hohlräume, welche sich in vertikal unteren Bereichen des Getriebegehäuses befinden, da sich aufgrund der Schwerkraft das Schmieröl von selbst dort sammelt. Fig. 1 zeigt schematisch eine Seitenansicht eines WKA-Getriebes 1 mit einer ersten Planetengetriebestufe 11, einer zweiten Planetengetriebestufe 12 sowie einer Stirnradgetriebestufe 13, wobei die quer zur Getriebeachse A gemessenen Abmessungen, z.B. der Hohlrad-Durchmesser, der zweiten Planetengetriebestufe 12 erheblich kleiner sind als die Abmessungen der ersten Planetengetriebestufe 11. Die Getriebestufen 11, 12, 13 wandeln sukzessive eine Drehzahl und ein Drehmoment einer Rotorwelle 14 in eine höhere Drehzahl und ein niedrigeres Drehmoment einer Generatorwelle 15. Vertikal unterhalb der ersten Planetengetriebestufe 11 und der Stirnradgetriebestufe 13 weist das Getriebegehäuse jeweils Ölwannen 16, 17 auf, in denen sich das im Betrieb der Getriebestufen zur Schmierung verwendete Öl sammelt. Typische Ölniveaus beim Stillstand des Getriebes sind in Fig. 1 gestrichelt N16, N17 angedeutet. Die beiden Ölwannen 16, 17 sind durch eine an der Außenseite des Getriebegehäuses angeordnete drucklose Ölleitung 18 miteinan der verbunden. Die Ölleitung 18 muss dabei öldicht und in der Lage sein, Fertigungstoleranzen der Schnittstellen, d.h. der Anschlussstellen der Ölleitung 18 an die Ölwannen 16, 17, auszugleichen.

Bisher werden solche Ölleitungen, die die beiden Ölwannen eines WKA-Getriebes miteinander verbinden, in der Regel entweder als eine Schlauchleitung oder als eine Kombination eines Rohrs mit einem Rohrkompensator ausgebildet.

Nachteilig bei einer Schlauchleitung ist insbesondere, dass das Schlauchmaterial altert und sich seine Elastizitätseigenschaften verschlechtern, was zu Undichtigkeiten führen kann.

Fig. 2 zeigt einen Schnitt eines herkömmlichen WKA-Getriebes, bei dem die Ölleitung ein Rohr 28 und einen Rohrkompensator 29 umfasst, die an ihren axialen Enden jeweils einen Flansch 281, 282 bzw. 291, 292 aufweisen. Die Flansche 281, 282 sind vorzugsweise SAE-Flansche (SAE = Society of Automotive Engineers). Das Rohr 28 und der Kompensator 29 sind über jeweils einen Flansch 281, 292 miteinander verbunden.

Über die jeweils anderen Flansche 282, 291 ist die RohrKompensator-Kombination an die Anschlussstellen der Ölwannen 16, 17 angeschlossen. Der Kompensator 29 ist dabei ein flexibles Element zum Ausgleich von Bewegungen der Ölleitung, insbesondere bei thermischen Längenänderungen, Vibrationen, Wanddurchführungen oder Setzungserscheinungen. Die Kompensation von Toleranzen erfolgt dabei mechanisch über einen elastischen Balg des Kompensators 29. Nachteilig bei einer RohrKompensator-Kombination sind die Vielzahl der Bauteile und die relativ hohen Investitions-Kosten.

Es ist Aufgabe der vorliegenden Erfindung, ein Windkraft-Getriebe mit einer verbesserten Ölleitung zwischen zwei Ölräumen des Getriebes bereitzustellen.

Diese Aufgabe wird erfindungsgemäß durch ein Windkraft-Getriebe mit den in Anspruch 1 angegebenen Merkmalen gelöst.

Das Windkraft-Getriebe umfasst zwei Ölräume zur Aufnahme von Öl. Jeder der Ölräume weist eine Öffnung zum Durchtritt von Öl auf. Die beiden Ölräume sind durch ein Rohr zur Leitung von Öl miteinander verbunden, welches mit jeweils einem Ende in den Öffnungen angeordnet ist. Die Öffnungen weisen jeweils eine Konizität mit einem inneren Konus, der sich von dem jeweiligen Ölraum weg öffnet, auf. Die in den Öffnungen angeordneten Enden des Rohrs weisen eine entsprechende Konizität mit einem äußeren Konus auf. Zur Abdichtung ist zwischen dem inneren Konus der Öffnungen und dem äußeren Konus der Rohrenden jeweils mindestens ein statisches Dichtungselement angeordnet.

Die Ölräume sind Ölbehälter, insbesondere in das Getriebegehäuse integrierte Hohlräume zur Aufnahme von Öl, welches zur Schmierung des Getriebes dient. Die Öffnungen der Ölräume führen von den Ölräumen nach außen, d.h. in die Umgebung des Getriebes. Das Verbindungsrohr verläuft also außerhalb des Getriebegehäuses. Die beiden Ölräume können jeweils einer Getriebestufe zugeordnet sein, z.B. der erste Ölraum einer Planetenstufe und der zweite Ölraum einer Stirnradstufe.

Erfindungsgemäß erfolgt die öldichte Verbindung der beiden Ölräume mittels eines Rohres, das in die beiden Ölräume mittels einer Spielpassung eingesteckt wird. Die axiale Fixierung des Rohres erfolgt beidseitig, d.h. an jedem der beiden Ölräume, durch einen Absatz an den Rohrenden. Ein Ausgleich der Toleranzen der Öffnungen der Ölräume erfolgt durch eine Konizität der Passung. Die Abdichtung der Rohrverbindung gegen ein ungewolltes Austreten von Öl erfolgt mittels einer oder mehrerer statischer Dichtungen, z.B. durch O-Ringe.

Die erfindungsgemäße Lösung führt, durch eine Reduzierung der verwendeten Bauteile und der Bearbeitungsoperationen, zu einer deutlichen Senkung der Herstellkosten gegenüber den bisher bekannten Lösungen.

Vorteilhafte Ausgestaltungen und Weiterbildungen der Erfindung sind in den abhängigen Ansprüchen angegeben.

Gemäß einer bevorzugten Ausgestaltung der Erfindung weist mindestens eines der Rohrenden eine Fase an seinem Außenumfang auf. Von Vorteil ist dabei, dass das Einführen des Rohrendes in die Öffnung erleichtert wird.

Gemäß einer bevorzugten Weiterbildung der Erfindung weist mindestens eines der Rohrenden einen Absatz für eine axiale Fixierung des Rohrs an der zugeordneten Öffnung auf. Von Vorteil ist dabei, dass das Rohr nicht weiter als gewollt in die Öffnung hineinrutschen kann, so dass z.B. eine ungewollte Quetschung eines Dichtelements vermieden wird.

Gemäß einer bevorzugten Weiterbildung der Erfindung umfasst das Rohr mehrere Rohrteile, wobei mindestens zwei Rohrteile axial zueinander verschiebbar sind. Dadurch wird die Montage und Demontage des Rohrs an einem WKA-Getriebe erleichtert. Die Abdichtung der mindestens zwei axial zueinander verschiebbaren Rohrteile kann durch ein Dichtelement, z.B. einen O-Ring, erfolgen. Die axiale Fixierung der mindestens zwei axial zueinander verschiebbaren Rohrteile kann durch eine radial verlaufende Schraubverbindung, z.B. eine Madenschraube, erfolgen.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 3: einen Längsschnitt einer ersten Ausgestaltung eines Rohrs zur Leitung von Öl;
- Fig. 4: einen Längsschnitt einer Radialverlagerung der Ölräume; und
- Fig. 5: einen Längsschnitt eines zweiteiligen Rohrs zur Leitung von Öl.

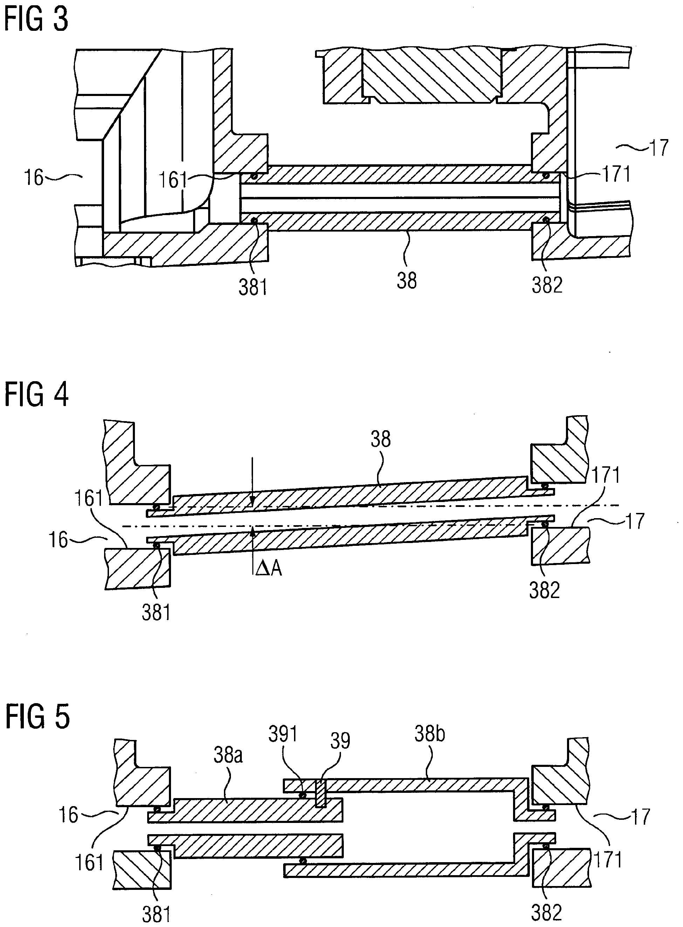

Fig. 3 zeigt ein Längsschnitt eines Rohrs 38, welches zwei Ölräume 16, 17 eines WKA-Getriebes miteinander verbindet, um den Austausch von Öl zwischen den beiden Ölräumen 16, 17 durch das Rohr 38 hindurch zu ermöglichen.

Jeder der Ölräume 16, 17 weist eine kreisrunde Öffnung 161, 171 auf, die durch eine Bohrung durch das Getriebegehäuse ausgebildet wird. Die im Wesentlichen waagrecht verlaufenden Mittelachsen der Kreisöffnungen fluchten im Idealfall, eventuelle Abweichungen können durch die Passungen des Rohrs in den Öffnungen ausgeglichen werden.

Das Rohr 38 besteht beispielsweise aus Metall, z. B. Stahl. Das Rohr kann aber auch aus anderen geeigneten Materialien wie Kunststoff, z.B. Glasfaserverstärktem Kunststoff, gefertigt sein. Der Durchmesser des Rohrs 38 liegt vorzugsweise im Bereich von 50 bis 300 mm. Die Wandstärke des Rohres 28 liegt vorzugsweise im Bereich von 10 bis 100 mm.

Die beiden Enden des Rohrs 38 sind jeweils in eine der beiden gegenüberliegenden Öffnungen 161, 171 eingesetzt. Dazu sind die Enden des Rohrs im Durchmesser so bearbeitet, dass die in die Öffnungen 161, 171 eingesetzten Enden noch ein gewisses Spiel aufweisen. Dadurch ist es möglich, dass ein evtl. Radialversatz der beiden Ölräume 16, 17, d.h. ein Achsversatz ΔA der beiden entsprechenden Öffnungen 161, 171, durch eine Schiefstellung des Rohrs 38 ausgeglichen werden kann, wie in Fig. 4 gezeigt ist.

Zwischen den Innenflächen der Öffnungen 161, 171 und den Außenflächen der Rohrenden sind Dichtelemente 381, 382, hier: O-Ringe, angeordnet. Es ist bevorzugt, wenn die Dichtelemente 381, 382 vor dem Einschieben des Rohrs in die Öffnungen 161, 171 auf die Außenflächen der Rohrenden aufgesetzt werden.

Die Montage des einteiligen Rohrs 38 von Fig. 3 in das WKA-Getriebe erfolgt, in dem das Rohr 38 beim Verbinden der Getriebestufen 11, 12, 13 in die jeweiligen Öffnungen 161, 171 eingesteckt wird. Zum Austausch des Rohrs 38 ist es erforderlich, die Stirnradstufe 13 von der zweiten Planetenstufe 12 zu lösen und axial auseinander zu schieben, damit das Rohr 38 aus den Öffnungen geschoben werden kann.

Fig. 5 zeigt ein zweiteiliges Rohr 38 mit einem ersten Rohrteil 38a und einem zweiten Rohrteil 38b. Die beiden Rohrteile 38a, 38b sind mit jeweils einem Ende in eine der beiden Öffnungen 161, 171 eingesteckt. Die beiden anderen Enden der Rohrteile 38a, 38b, die sog. Verbindungsenden, sind zur Verbindung der beiden Rohrteile 38a, 38b ineinandergesteckt; dabei sind der Außen-Durchmesser des Verbindungsendes des ersten Rohrteils 38a und der Innen-Durchmesser des Verbindungsendes des zweiten Rohrteils 38b so ausgebildet, dass das Verbindungsende des ersten Rohrteils 38a in das Verbindungsende des zweiten Rohrteils 38b eingesteckt werden kann. Die Verbindung weist dabei etwas radiales Spiel auf, damit ein die Verbindung abdichtender Dichtring 391 zwischen dem Außen-durchmesser des engeren Rohrteils 38a und dem Innendurchmesser des weiteren Rohrteils 38b eingeschoben werden kann.

Zur axialen Sicherung der beiden Rohrteile 38a, 38b relativ zueinander werden die beiden Rohrteile 38a, 38b mit einer radial durch beide Rohrteile 38a, 38b verlaufenden Schraube 39, z.B. einer Madenschraube, verbunden. Axial- und Radial-Versatz der beiden durch das Rohr 38 miteinander verbundenen Ölräume 16, 17 wird über axiales und radiales Spiel der Rohrteile 38a, 38b an den Enden ausgeglichen, mit denen die Rohrteile 38a, 38b in die Öffnungen 161, 171 der Ölräume 16, 17 eingesteckt sind.

Die Montage des zweiteiligen Rohrs 38a, 38b von Fig. 5 in das WKA-Getriebe erfolgt, in dem die Rohrteile 38a, 38b zunächst weit ineinander geschoben werden, dann axial auf die Öffnungen 161, 171 ausgerichtet werden und dann die Rohrteile 38a, 38b axial auseinander und gleichzeitig in die jeweiligen Öffnungen 161, 171 eingeschoben werden. Zuletzt wird die axiale Lage der Rohrteile 38a, 38b zueinander durch die Verbindung mit der Schraube 39 gesichert. Durch die Möglichkeit der Längenänderung des zweiteiligen Rohrs 38a, 38b ist es zum Austausch des Rohrs 38 somit nicht erforderlich, die Stirnradstufe 13 von der zweiten Planetenstufe 12 zu lösen und axial auseinander zu schieben, sondern das Rohr kann ohne eine Demontage der Getriebestufen 12, 13 gewechselt werden.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den in den Ansprüchen definierten Schutzumfang der Erfindung zu verlassen.

## Patentansprüche

1. Windkraft-Getriebe (1) mit zwei Ölräumen (16, 17) zur Aufnahme von Öl,
wobei jeder der Ölräume (16, 17) eine Öffnung (161, 171) zum Durchtritt von Öl aufweist, wobei die beiden Ölräume (16, 17) durch ein Rohr (38, 38a, 38b) zur Leitung von Öl miteinander verbunden sind, welches mit jeweils einem Ende in den Öffnungen (161, 171) angeordnet ist,
**dadurch gekennzeichnet, dass**
die Öffnungen (161, 171) jeweils eine Konizität mit einem inneren Konus, der sich von dem jeweiligen Ölraum (16, 17) weg öffnet, aufweisen, und die in den Öffnungen (161, 171) angeordneten Enden des Rohrs (38, 38a, 38b) eine entsprechende Konizität mit einem äußeren Konus aufweisen, wobei zur Abdichtung zwischen dem inneren Konus der Öffnungen (161, 171) und dem äußeren Konus der Rohrenden jeweils mindestens ein statisches Dichtungselement (381, 382) angeordnet ist.

2. Windkraft-Getriebe nach Anspruch 1,
wobei mindestens eines der Rohrenden eine Fase aufweist.

3. Windkraft-Getriebe nach Anspruch 1 oder 2,
wobei mindestens eines der Rohrenden einen Absatz für eine axiale Fixierung des Rohrs (38, 38a, 38b) an der zugeordneten Öffnung (161, 171) aufweist.

4. Windkraft-Getriebe nach einem der vorhergehenden Ansprüche,
wobei das Rohr (38, 38a, 38b) mehrere Rohrteile (38a, 38b) umfasst, wobei mindestens zwei Rohrteile (38a, 38b) axial zueinander verschiebbar sind.

## Claims

1. Wind power gearbox (1) having two oil chambers (16, 17) for receiving oil,
wherein each of the oil chambers (16, 17) has an opening (161, 171) to allow oil to pass through,
wherein the two oil chambers (16, 17) are connected to one another by a pipe (38, 38a, 38b) for routing oil, which is arranged with one end in each of the openings (161, 171),
**characterised in that** the openings (161, 171) each have a conicity with an inner cone, which opens away from the respective oil chamber (16, 17), and the ends of the pipe (38, 38a, 38b) arranged in the openings (161, 171) have a corresponding conicity with an outer cone,
wherein at least one static sealing element (381, 382) is arranged in each case between the inner cone of the openings (161, 171) and the outer cone of the pipe ends for sealing purposes.

2. Wind power gearbox according to claim 1,
wherein at least one of the pipe ends has a bevel.

3. Wind power gearbox according to claim 1 or 2,
wherein at least one of the pipe ends has a step for an axial fixing of the pipe (38, 38a, 38b) on the assigned opening (161, 171).

4. Wind power gearbox according to one of the preceding claims,
wherein the pipe (38, 38a, 38b) comprises a number of pipe parts (38a, 38b), wherein at least two pipe parts (38a, 38b) can be displaced axially relative to one another.

## Revendications

1. Transmission (1) d'éolienne ayant deux espaces (16, 17) de réception d'huile,
dans laquelle chacun des espaces (16, 17) de réception d'huile a une ouverture (161, 171) pour le passage d'huile, dans laquelle les deux espaces (16, 17) pour de l'huile communiquent entre eux par un tuyau (38, 38a, 38b) pour conduire de l'huile, qui est disposé par respectivement une extrémité dans les ouvertures (161, 171),
**caractérisé en ce que**
les ouvertures (161, 171) ont respectivement une conicité ayant un cône intérieur, qui s'ouvre en s'éloignant de l'espace (16, 17) pour de l'huile respectif et les extrémités, disposées dans les ouvertures (161, 171), des tuyaux (38, 38a, 38) ont une conicité correspondante ayant un cône extérieur,
dans lequel pour assurer l'étanchéité, il est monté respectivement au moins un élément (381, 382) d'étanchéité statique entre le cône intérieur des ouvertures (161, 171) et le cône extérieur des extrémités du tuyau.

2. Transmission d'éolienne suivant la revendication 1,
dans laquelle au moins l'une des extrémités du tuyau a un biseau.

3. Transmission d'éolienne suivant l'une des revendications 1 ou 2, dans laquelle au moins l'une des extrémités du tuyau a un ressaut pour une immobilisation axiale du tuyau (38, 38a, 38b) sur l'ouverture (161, 171) associée.

4. Transmission d'éolienne suivant l'une des revendications précédentes, dans laquelle le tuyau (38, 38a, 38b) a plusieurs parties (38a, 38b) de tuyau, au moins deux parties (38a, 38b) de tuyau pouvant coulisser axialement l'une par rapport à l'autre.
